# EUROPEAN PATENT SPECIFICATION

(11) **EP 1 396 854 B1**
(45) Date of publication and mention of the grant of the patent: **28.06.2006**
(21) Application number: 02019779.4
(22) Date of filing: 04.09.2002
(51) Int. Cl.: G11B 7/26, G11B 7/0045

(54) **Method and device to produce optical discs**
Verfahren und Vorrichtung zur Herstellung von optischen Platten
Procédé et dispositif de fabrication de disques optiques

(43) Date of publication of application: 10.03.2004
(73) Proprietor: Sony DADC Austria AG, 5081 Anif (AT)
(72) Inventor: Reiter, Gottfried, Sony DADC Austria AG, 5081 Anif (AT); Schuller, Josef, Sony DADC Austria AG, 5081 Anif (AT); Holzapfel, Klaus, Sony DADC Austria AG, 5081 Anif (AT); Kattner, Günther, Sony DADC Austria AG, 5081 Anif (AT)
(74) Representative: Müller - Hoffmann & Partner

(56) References cited:
- EP-A- 0 986 052
- EP-A- 1 076 332
- WO-A-02/11136
- US-A- 4 646 279
- US-A- 5 809 006
- SCHOUHAMER IMMINK K A ET AL: "OPTIMIZATION OF LOW-FREQUENCY PROPERTIES OF EIGHT-TO-FOURTEEN MODULATION" RADIO AND ELECTRONIC ENGINEER, INSTITUTION OF ELECTRONIC AND RADIO ENGINEERS. LONDON, GB, vol. 53, no. 2, 1 February 1983 (1983-02-01), pages 63-66, XP000573315 ISSN: 0033-7722

## Description

The present invention relates to a method and a device to produce a record carrier for digital data, in particular to record carriers, i.e. storage media, which store digital data as an asynchronous signal, e.g. Compact Discs (CDs) and Digital Versatile Discs (DVDs) including all existing or future formats of CD and DVD or other Optical Storage Media which work according to a similar concept. Further, the present invention relates to such a record carrier itself.

In particular, the method and a device to produce a record carrier for digital data according to the present invention relates to such record carriers that allow to make a physical copy or creating a complete data image of the media content, but the physical copy itself is not accessible anymore or the access is disturbed or that the error rate is increased dramatically so that e.g. listening to the music content of a copied audio CD is not entertaining anymore.

Optical storage discs with information stored on one or both sides have come to be used for a variety of purposes, most notably in the music, games, video and computer industry. Digital information is stored on the optical storage media in the form of pits arranged along circular, concentric tracks on one or on both sides of the disc. The track is typically read from the inside out, but may also be read form outside in, as it is already used for some optical storage media.

The data itself on the track is subdivided into frames, each equal in length, containing equal amounts of information. Each frame has a dedicated layout depending on the type of optical storage media (CD, DVD). Such a frame always contains the user data symbols itself but may also contain data for synchronization, merging data between data symbols and error correction.

The signal on a optical storage medium itself is asynchronous, which means that in the decoding process synchronization, timing information, parity data or other data has to be spied out from the signal.

Due to the nature of such storage media copies can be made easily. To cope with this situation, there exist various copy protection schemes, in particular US 5,699,434 discloses a method of inhibiting copying of digital data according to which a sequence of symbols is added to the original data, wherein the sequence of symbols is selected to encode into channel bits having a large accumulated digital sum variance (DSV). The sequence of symbols is then encoded by a special encoder that generates special channel bits that do not have a large accumulated digital sum variance so that no playback problems will occur. However, in case of a normal encoding of the accessed data including the added sequence of symbols for the purpose of copying or further recording, i. e. a re-encoding, channel bits having a large accumulated digital sum variance will be likely generated. The generated digital sum values can be used to encode additional data, e. g. by their sign, so that other encoders will encode the same original data into channel bits that do not include this additional data which might be used for decrypting, descrambling or otherwise modifying the original data. Further, it is stated that other encoders might also encode the same original data in channel bits that cannot be recovered.

However, according to this copy protection method always a special encoder is necessary that needs to be adapted to encode the selected sequence of symbols which would normally encode into channel bits having an accumulated digital sum variance that exceeds a predetermined limit non-optimally into channel bits having an accumulated digital sum variance that does not exceed the predetermined limit. Due to the needed special design such an encoding can become costly.

Further, the European patent application with application number EP 02 008 668.2 "Copy Protection System for Optical Discs" which was filed on April 14, 2002 by the same applicant as this invention, discloses a system for copy protection of record carriers for digital data according to which at least one predetermined repetitive bit pattern which encodes into channel bits having an accumulated digital sum value that exceeds a first predetermined limit and that is below a second predetermined limit is determined and recorded onto said record carrier by a mastering process so that said accumulated digital sum value which exceeds said first predetermined limit and is below said second predetermined limit is achieved in said at least one replaced and/or inserted part, wherein said limits are chosen so that an original record carrier can basically be accessed, but a copy thereof cannot be accessed or shows not tolerable or correctable errors.

However, using this system of including specially selected bit patterns that EFM-encode into channel bits which produce a high accumulated digital sum value (DSV) might lead to a non-accessibility or disturbed accessibility even of the original record carrier on some record carrier reading devices that are sensitive thereto.

An increased DSV might also occur when, e.g. in case of CD-audio formats, audio data with a constant level is recorded, e.g. in pauses in which the level is not reduced to zero.

Therewith, although the normally used coding algorithms, e.g. EFM, aim to minimize the DSV in the raw data stream, i.e. that data stream that is used to modulate the laser beam for the production of the glass master, sometimes a high DSV will occur or is even wanted. This high DSV leads to an increased tracking error signal, i.e. the signal that indicates the displacement of the reading unit in respect to the track when the tracking control is activated, so that some players will not accept the record carrier.

WO 02 11136 discloses a method of copy protecting optical discs using the differences in capability between the encoder associated with a laser beam recorder and that in currently available CD writers, in particular with regard to the choice of merge bits, which affects the digital sum value characteristics. If the DSV has a rapid rate of change over a significant period of time or if the DSV has substantial low frequency components then the transitions in the EFM signal may be shifted from their ideal values and/or the ability of tracking and focus circuits in CD drives to maintain optimal head positioning may be compromised. This typically causes read failures from the CD. In one embodiment, the data patterns which are chosen to cause DSV problems are repeated patterns of values.

Therefore, it is the object underlying the present invention to provide a further method and a device to produce a record carrier for digital data, as well as such a record carrier itself, which lead to a reducing of the tracking error signal, i.e. ensure a higher grade of accessibility of the produced record carriers.

The method to produce a record carrier for digital data according to the present invention is defined in independent claim 1. Preferred embodiments thereof are defined in the dependent claims 2 to 15. A device to produce a record carrier according to the present invention is defined in independent claim 17. Preferred embodiments thereof are defined in the dependent claims 18 to 27. A record carrier according to the present invention is defined in independent claim 28 and a preferred embodiment thereof is defined in dependent claim 29. A computer program product according to the present invention is defined in claim 16.

Therewith, according to the present invention the tracking error is reduced by a "displacement" of the ideal track position that is defined by the not adapted, i.e. normal tracking. The displacement is performed by adapting the tracking on basis of the emulated tracking error signal so that the finally resulting real tracking error signal is reduced, and in particular so low that a tracking of a reading device is possible.

The method and device according to the invention can be applied to record signals that are conventionally converted into channel bits, e.g. by the EFM, but which channel bits still show e.g. high DSV values that lead to non accessibility or accessibility with reduced quality. In this case original record carriers according to the present invention that are also secured by a copy protection as defined in the above referenced European patent application "Copy Protection System for Optical Discs" can be accessed by a larger group of reading devices, in particular also by such reading devices that are sensitive to high DSVs.

Further, the method and device according to the invention might be applied alternatively to the conventional technique of securing readability of recorded data or might be applied with such a technique that is less effective and needs less calculation power, i.e. the method and device according to the invention might not only be used for improving the readability of record carriers that show a high DSV, but for securing that a tracking of a reading device is possible at all.

A preferred embodiment of, the method comprises the step of:
- supplying said emulated tracking error signal or said signal derived therefrom to a wobble input of a record carrier writing or mastering machine to record said data stream, which wobble input is normally used to pre-write timing information onto record carrier recordables.

Therefore, according to this preferred embodiment a normal tracking is performed, i.e. based on a not changed or adjusted tracking signal, but an adjustment of the track position is performed by supplying a track displacement signal to the wobble input of a record carrier writing or mastering machine.

A preferred embodiment of the method comprises the step of:
- inverting said emulated tracking error signal to generate said signal derived therefrom.

The tracking error signal seems to be reduced or compensated in particular by this displacement of the data track opposite to the track error generated by the data stream. This reduction or compensation seems to result from the inertia of the pickup that comprises the reading laser, since it seems that this pickup cannot follow such a fast track displacement. The tracking error signal that would be generated by e.g. a high DSV will then be reduced or compensated by the tracking error signal with opposite phase that is generated by the track displacement so that the pickup is in fact guided to stay above the ideal track position.

A preferred embodiment of the method comprises the step of:
- modulating the intensity of the recording laser beam that writes the data onto the record carrier or a master to produce said record carrier on basis of said data stream and said emulated tracking error signal or a signal derived therefrom.

This particular preferred embodiment of the present invention reduces a jitter that might be introduced by a track displacement according to the present invention. The jitter then shows reduced values in the range of those generated without a displaced track. As the whole method according to the present invention, also this particular preferred embodiment of the present invention can be combined with other methods to improve the accessibility of record carriers.

In this case, the device according to a preferred embodiment comprises
- a rectifier for rectifying the emulated tracking error signal to generate said signal derived therefrom.

In this case, as is defined in the corresponding method step, the intensity of the modulation is preferably chosen on basis of said emulated tracking error signal or said signal derived therefrom so that high and low reflection areas of the recorded record carrier which lie displaced from an ideal track position will have an equal reading length to corresponding areas which do not lie displaced from the ideal track position. In case a rectifier is available in the device according to the present invention, this rectifier might also perform this setting of the level of the emulated tracking error signal or the rectified emulated tracking error signal.

In this specification the term channel bits is used for the bit pattern that satisfies the various constraints for digital data as an asynchronous signal, such as a trade-off between recording density and error rate, the highest permissible transition frequency, self-clocking, the NonReturn to Zero Inverted (NRZI) format which has a run length limited (RLL) code, e. g. for compact discs usually the (2,10)-RLL, which means that the number of consecutive zeros in the encoded bit pattern must be at least 2 and no greater than 10, an requirement for a limit on the low frequency content of the read signal, and so on.

As mentioned above, according to a preferred embodiment of the present invention advantage is taken from the effect that the optical pickup of reading devices has a certain inertia so that it cannot follow fast displacements of the tack which results in a reducing or compensation of the tracking error signal resulting from the data stream itself.

The accompanying drawings, which are incorporated in and constitute a part of this specification, illustrate embodiments of the invention and, together with a general description of the invention given above, and the detailed description of the embodiment given below, serve to explain the principles of the invention, wherein:
- **Fig. 1**: illustrates a tracking error compensation according to a first preferred embodiment of the present invention,
- **Fig. 2**: shows a flowchart elucidating the method for the tracking error compensation according to the first preferred embodiment of the present invention,
- **Fig. 3**: shows a preferred embodiment of a device according to the present invention, and
- **Fig. 4**: shows a flowchart elucidating a particular preferred embodiment of the present invention that might be performed additionally to the method for the tracking error compensation according to the first preferred embodiment of the present invention as shown in Fig. 2.

The following description shows as an example how to modify the tracking while writing a data stream of an audio CD. The tracking is modified on basis of an emulated tracking error signal that is in this case calculated on basis of the data stream using the principle of the three beam tracking error signal generation.

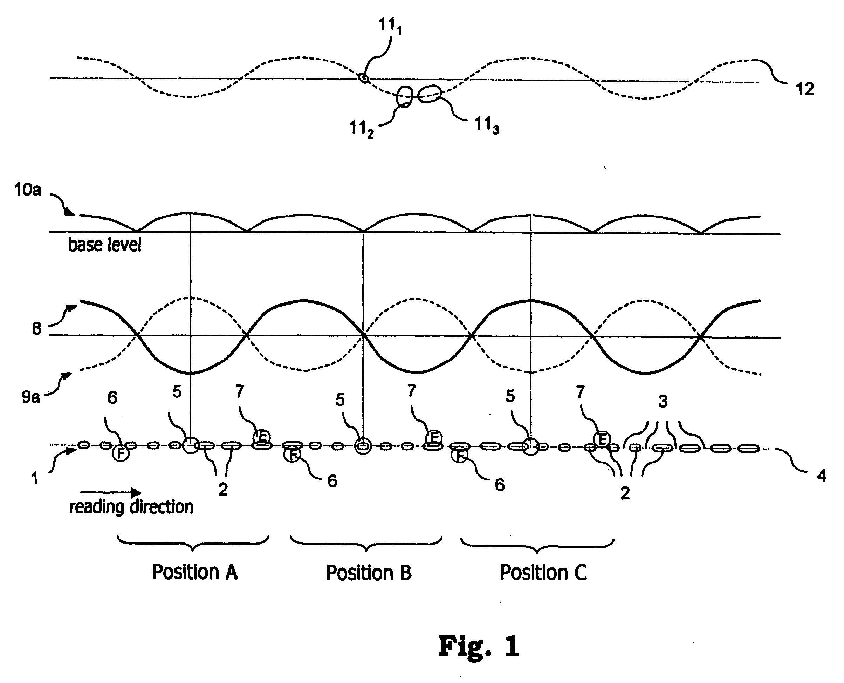

Fig. 1 shows in the bottom line a part of an emulated CD recording of an exemplary EFM data stream 1 comprising smaller and bigger low reflectivity areas 2 (shown as encircled areas) alternating with high reflectivity areas 3 (shown between the encircled areas) along a track 4 that is shown as a straight line. Overlaid on said track 4 three emulated reading beams of an optical pickup are shown in three exemplary positions A, B, and C of the optical pickup, which itself is not shown. The optical pickup comprises three reading beams, namely a middle beam 5 for actually reading out the EFM data stream 1, a F-marked beam 6 that is displaced slightly to the right of the track 4 and backward with respect to the middle beam 5 in the reading direction that wanders in the direction position A to position B to position C, and an E-marked beam 7 that is displaced slightly to the left of the track 4 and forward with respect to the middle beam 5 in the reading direction.

An emulated tracking error signal 8, which is shown as a solid bold line in the diagram above the EFM data stream 1, is obtained by subtracting the signal that would be obtained from the F-marked beam 6 from that that would be obtained from the E-marked beam 7 along the track 4, i.e. continuously while the optical pickup is emulated to follow the track 4. The shown emulated tracking error signal 8 according to the exemplary EFM data stream 1 is a sinus curve. How the emulated tracking error signal 8 is derived is exemplary shown in the three shown emulated positions A, B, and C of the optical pickup. In the first shown position A of the optical pickup the E-marked beam 7 is placed over a large one of the low reflective areas 2 and the F-marked beam is placed over one of the high reflective areas 3 so that the difference "E-F" will be high and negative, i.e. the tracking error signal 8 in this first shown position A basically corresponds to the negative signal of the F-marked beam 6. In the second shown position B of the optical pickup the E-marked beam 7 is placed over a large one of the low reflective areas 2 and the F-marked beam 6 is also placed over a large one of the low reflective areas 2 so that the difference "E-F" will be zero, i.e. the tracking error signal 8 in this second shown position B is zero. In the third shown position C of the optical pickup the E-marked beam 7 is placed over one of the high reflective areas 3 and the F-marked beam 6 is placed over a large one of the low reflective areas 2 so that the difference "E-F" will be high and positive, i.e. the tracking error signal 2 in this third shown position C basically corresponds to the signal of the E-marked beam 7.

A tracking signal 19 defines the track position and positions the optical pickup for writing. An "adaptation of the tracking" according to the present invention is preferably performed by supplying an inverted emulated tracking error signal 9a to the wobble input of a CD mastering machine. This means that not the tracking signal 19 that positions a laser head 18 as such is influenced or changed, but this tracking signal 19 is left as it is and the writing laser beam 14b is displaced (deflected or diffracted) so that it falls onto a different position of optical devices within the laser head 18 that is positioned by the tracking signal 19 so that the laser head 18 writes a displaced track, i.e. the arrangement of writing laser beam 14b and said optical devices within the laser head 18 is relatively adjusted to achieve a track displacement. The wobble input is normally used for writing a groove according to a wobble signal with a predetermined frequency as timing information onto recordable record carriers, e.g. a 22.05kHz signal for CD-Rs. The inverted emulated tracking error signal 9a is shown as slashed line in the same diagram as the emulated tracking signal 8. Before the inverted emulated tracking error signal 9a is actually supplied to the wobble input, it might be filtered, e.g. with a 100kHz low pass filter, to become a filtered inverted emulated tracking error signal 9b.

Therewith, by supplying the inverted emulated tracking error signal 9a or the filtered inverted emulated tracking error signal 9b to the wobble input of a CD mastering machine an indirect "modulation or superposing" of the normal tracking signal is performed by deflecting the writing laser beam in that the track will be displaced from its normal position, i.e. the position without a signal at the wobble input. The displacement is performed according to the inverted emulated tracking error signal 9a or the filtered inverted emulated tracking error signal 9b.

The tracking error signal resulting when reading the so written record carrier will be reduced or compensated in particular due to the displacement of the data track opposite to the track error generated by the data stream. As mentioned above, this reduction or compensation might result from the inertia of the pickup that comprises the reading laser, since it seems that this pickup cannot follow such a fast track displacement. The tracking error signal that would be generated by e.g. a high DSV will then be reduced or compensated by the tracking error signal with opposite phase that is generated by the track displacement so that the pickup is in fact guided to stay above the ideal track position.

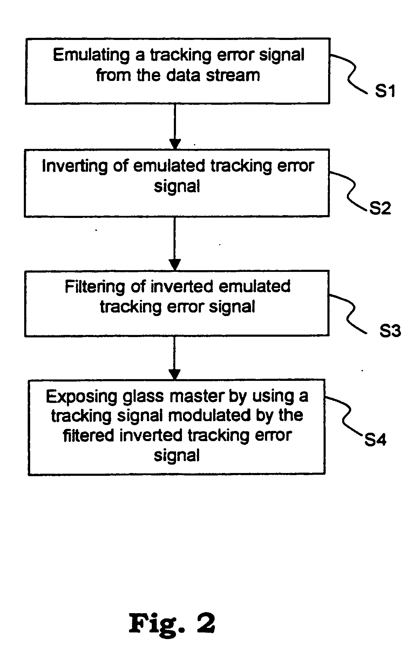

The basic principle underlying this preferred embodiment of the present invention will be described in connection with Fig. 2 in the following. Fig. 2 shows a flowchart illustrating the four basic method steps to implement the preferred embodiment of the present invention.

In a first step 1 the tracking error signal 8 gets calculated or emulated from the data stream 1, in particular the raw data stream or channel bits, e.g. an EFM data stream 1. Thereafter, in a second step S2 the calculated or emulated tracking error signal 8 gets inverted to obtain the inverted calculated or emulated tracking error signal 9a, and thereafter in a following step S3 a filtering of the filtered calculated or emulated tracking error signal is performed to obtain an filtered inverted calculated or emulated tracking error signal 9b. Finally, in a fourth step S4 the glass master is exposed by using a tracking that is modulated or superposed by the filtered inverted calculated or emulated tracking error signal 9b, i.e. the filtered inverted calculated or emulated tracking error signal 9b is used for the definition of the track position additionally to the normal tracking signal 19, which is described further below.

Depending on the unit for superposing the tracking and such a track displacement signal, e.g. the deflection of writing laser beam on basis of the filtered inverted calculated or emulated tracking error signal 9b according to the above indicated preferred embodiment of the present invention, a digital/analog conversion might be performed before the filtered inverted calculated or emulated tracking error signal 9b is supplied to said unit, or between the filtering and the inversion.

Also, the filtering and inversion might be swapped and/or be performed after such a digital/analog conversion.

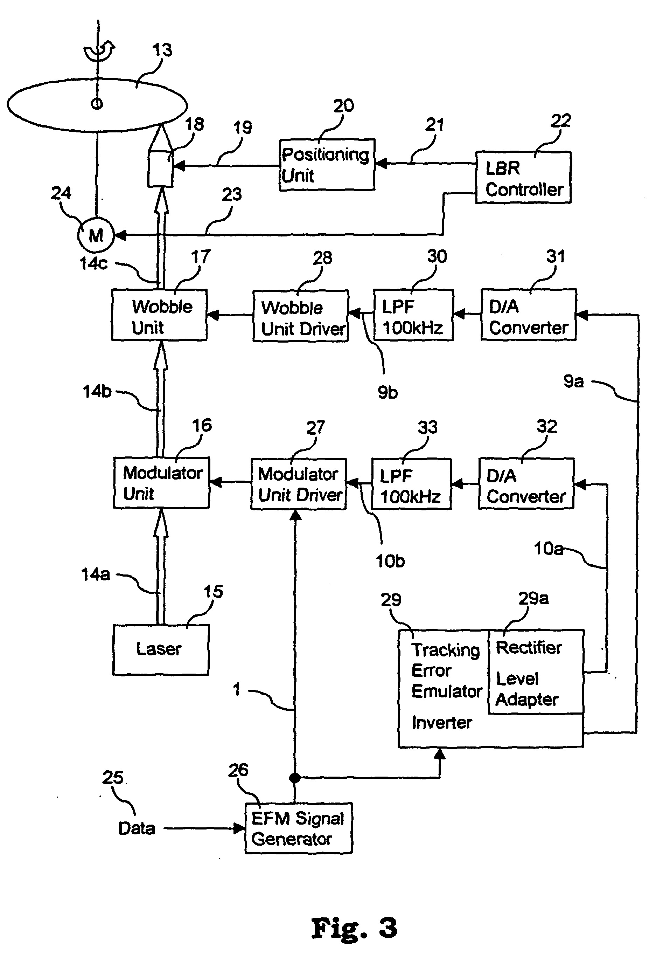

Fig. 3 shows a preferred embodiment of a device to produce a record carrier, or - as preceding stage - a glass master based on which the record carrier is then produced.

A glass master 13 gets exposed by a laser beam 14a emitted from a laser 15, guided through a modulator unit 16 to become an intensity modulated laser beam 14b, further guided through a wobble unit 17 to become a position defined intensity modulated laser beam 14c that is finally guided onto the glass master 13 by a laser head 18. Usually, the laser 15 and the modulator unit 16 are fixed mounted in a mastering machine for optical record carriers, e.g. CDs and DVDs, and the wobble unit 17 and the laser head 18 are mounted on a moveable optical table. The moveable optical table receives a tracking signal 19 from a positioning unit 20, which tracking signal 19 is exemplary shown to be supplied to the laser head 18, since this laser head 18 in the end guides the writing laser beam onto the glass master 13. The positioning unit 20 receives a first control signal 21 from a laser beam recorder (LBR) controller 22 that also sends out a second control signal 23 to a spindle motor 24 that rotates the glass master 13.

Data 25 to be recorded is supplied to an EFM signal generator 26 that generates the eight to fourteen modulated (EFM) data stream 1 based on which the laser beam 14a is modulated by the modulator unit 16 to become the intensity modulated laser beam 14b. Therefore, the EFM data stream 1 is supplied to a modulator unit driver 27 that drives the modulator unit 16.

As indicated before, the entity of wobble unit 17 and laser head 18, as well as positioning unit 20, and LBR controller 22 performs the above functionality to normally position the writing laser beam over a wanted track position and to have the possibility to displace the writing laser beam from that normal position based on a signal that is input to the wobble unit 17. As mentioned before, this input is used according to the prior art for e.g. writing a groove based on a wobble signal onto CD or DVD recordables by supplying a wobble frequency signal to the wobble unit 17, usually through a wobble unit driver 28. The wobble unit 17 is usually not used for recording a glass master of a record carrier that is not recordable or rewritable.

However, according to the described preferred embodiment of the present invention, the wobble unit 17 is used to displace the track for compensating such effects that e.g. result from a high DSV in the data stream 1. Therefore, the filtered inverted calculated or emulated tracking error signal 9b is supplied to the wobble unit 17 to compensate tracking errors that would result from the data stream 1. To achieve this, the data stream 1 is supplied to a tracking error emulator inverter 29 that calculates or emulates the inverted calculated or emulated tracking error signal 9a from the data stream 1. The inverted calculated or emulated tracking error signal 9a is supplied to a low-pass filter 30 with a cut-off frequency of 100 kHz via a digital/analog converter 31. The resulting inverted filtered calculated or emulated tracking error signal 9b is supplied as said "track displacement signal" to the wobble unit 17 via said wobble unit driver 28.

As mentioned above, the processing order of the low-pass filter 30 and the inverter within the tracking error emulator 29 might be changed. It is also possible that the digital/analog converter 31 is not arranged between these both devices, but before or after these devices so that the inversion and/or the low-pass filtering will not be performed fully digitally or fully analog.

The displacement of the track from the normal position might introduce a jitter while reading a record carrier produced as indicated above. This effect takes place, since in general the optical pickup of the reading device cannot follow these usually fast changes of the track position and therefore the track parts in the range of the track displacement lie outside the centre of the reading laser beam, which leads to the jitter effect that the low reflective areas 2, e.g. so called pits, will become shorter and the high reflective areas 3, e.g. so called lands, will become longer in respect to the corresponding areas lying in the centre of the reading beam laser. This difference in the lengths of the signals is called jitter and might lead to reading errors or problems.

According to the following particular preferred embodiment of the present invention this jitter might be compensated. The concept of this jitter compensation is described independently from the present invention in the applicant's parallel European patent application "Method and Device to Produce an Optical Disc".

For the jitter compensation according to this concept in connection with the present invention, basically the laser beam gets additionally intensity modulated on basis of the track displacement signal, e.g. the modulator unit driver 27 drives the modulator unit 16 on basis of the EFM data stream 1 and the track displacement signal, i.e. the concept of this jitter compensation is to use a track displacement signal for the additional control of the light intensity of the writing laser beam, i.e. additional to the normal light intensity control on basis of the signal to be recorded. Preferably, the track displacement signal gets rectified and/or level adapted and/or digital/analog converted and/or filtered before it is input to the modulator unit driver 27.

The absolute intensity of the additional modulation gets chosen so that high and low reflective areas of the recorded record carrier which lie displaced from an ideal track position will have an equal reading length to corresponding areas which do not lie displaced from the ideal track position. This equal reading length might be achieved by either actually adapting the length of the displaced lands and pits, and/or by varying their width so that no or no considerable deviation from the centre of the reading laser beam is achieved. By this additional modulation, the jitter can be reduced or compensated to normal values, i.e. as without track displacement.

Fig. 1 shows (above of the diagram showing the calculated or emulated tracking error signal 8 and the inverted calculated or emulated tracking error signal 9a) a diagram depicting the additional intensity modulation signal 10a which is gained from rectifying the inverted calculated or emulated tracking error signal 9a, and adapting its level according to the above described requirements.

According to the particular preferred embodiment described in the following also in reference to Fig. 3, this rectifying and level adapting is performed by a rectifier and level adapter 29a within the tracking error emulator inverter 29. Actually, the additional intensity modulation signal 10a gets digital to analog converted by a digital/analog converter 32 and low pass filtered e.g. by a low pass filter 33 with a cut-off frequency of 100kHz before being supplied as filtered additional intensity modulation signal 10b to the modulator unit driver 27 which then drives the modulator unit 16 on basis of the EFM data stream 1 and the filtered additional intensity modulation signal 10b.

In the top diagram of Fig. 1 a part of the track of the glass master 13 (or of a corresponding record carrier) according to the present invention and its particular preferred embodiment is shown. The track 12 is not a straight line (as it would be in the notation of this Figure), but is displaced according to the additional modulation based on the filtered inverted calculated or emulated tracking error signal 9b, i.e. in this case goes to the right of the writing direction in case of a rising filtered inverted calculated or emulated tracking error signal 9b and to the left of the writing direction in case of a falling filtered inverted calculated or emulated tracking error signal 9b. Depending on the effect introduced e.g. by the high DSV these directions might be changed or - as indicated above - the inversion of the tracking error signal might be skipped. Further, first to third exemplary pits 11₁ to 11₃ and lands are depicted, where it can be seen that the second and third shown pits 11₂ and 11₃ in the reading direction show an increased width and length in respect to the first shown pit 11₁, wherein the first shown pit 11₁ is recorded with a base intensity level of the additional intensity modulation signal 10b, and the second and third shown pits 11₂ and 11₃ are recorded with an increased intensity level, since the additional intensity modulation signal 10b approximately has its maximum level when these pits are recorded.

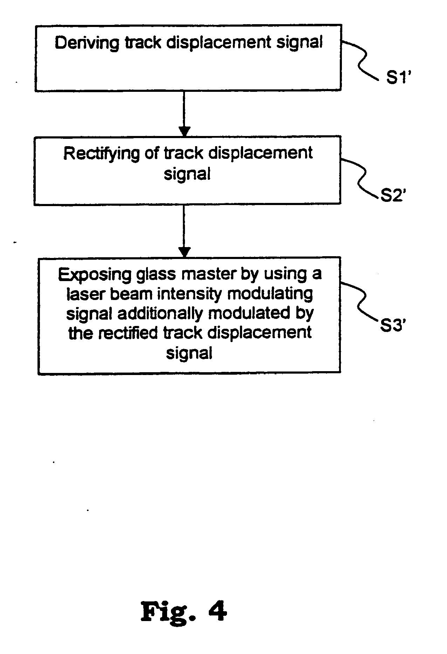

Fig. 4 shows a flow chart illustrating the additional laser beam intensity modulation according to the particular preferred embodiment of the present invention. In a first step S1' the track displacement signal is derived, e.g. as described above. Thereafter, in a second step S2' the track displacement signal gets rectified and level adapted. Finally, in a third step S3' the glass master is exposed by using a laser beam intensity signal that is additionally modulated by the rectified and level adapted track displacement signal, i.e. the rectified and level adapted track displacement signal is used for the additional intensity modulation of the writing laser beam 14a to generate the intensity modulated laser beam 14b for recording the data 25.

The method and device according to the present invention, according to its preferred embodiments and also according to its particular preferred embodiment can advantageously be combined with other methods and devices to achieve an improved readability of record carriers, e.g. the EFM.

## Claims

1. Method to produce a record carrier for digital data, **characterized by** the steps of:
- emulating a tracking error signal (8) from a data stream (1) corresponding to the digital data to be recorded, and
- recording the data stream (1) on the basis of a tracking that is adapted on basis of the emulated tracking error signal (8) so that a real tracking error signal that is generated when reading the recorded data is reduced.

2. Method according to claim 1, **characterized by** the step of:
- superposing a track adjustment according to the emulated tracking error signal (8) or a signal (9a, 9b) derived therefrom on said tracking to adapt it on basis of the emulated tracking error signal (8) so that a real tracking error signal that is generated when reading the recorded data is reduced.

3. Method according to claim 2, **characterized by** the step of:
- deflecting a recording laser beam (14b) on basis of said emulated tracking error signal (8) or said signal (9a, 9b) derived therefrom to superpose the track adjustment according to the emulated tracking error signal (8) or said signal (9a ,9b) derived therefrom on said tracking.

4. Method according to claim 3, **characterized by** the step of:
- using an optical or optical-mechanical device (17) to deflect said recording laser beam (14b), in particular an acousto-optical deflector.

5. Method according to claim 3 or 4, **characterized by** the step of:
- supplying said emulated tracking error signal (8) or said signal (9a, 9b) derived therefrom to a wobble input of a record carrier writing or mastering machine while recording said data stream, which wobble input is normally used to pre-write timing information onto record carrier recordables.

6. Method according to anyone of claims 2 to 5, **characterized by** the step of:
- inverting said emulated tracking error signal (8) to generate said signal (9a) derived therefrom.

7. Method according to anyone of claims 2 to 6, **characterized by** the step of:
- filtering said emulated tracking error signal (8) to generate said signal (9b) derived therefrom.

8. Method according to claim 7, **characterized in that**
- said filtering is a low-pass filtering, in particular with a cut-off frequency of 100kHz.

9. Method according to anyone of claims 2 to 8, **characterized by** the step of:
- digital-analog converting said emulated tracking error signal (8) or said signal (9a, 9b) derived therefrom before superposing the emulated tracking error signal (8) or said signal (9a, 9b) derived therefrom on said tracking.

10. Method according to anyone of claims 1 to 9, **characterized by** the step of:
- emulating said tracking error signal (8) based on a simulation of a three beam tracking principle on basis of the data stream (1).

11. Method according to anyone of claims 1 to 10, **characterized in that** said data stream (1) is used for modulating the intensity of a recording laser beam (14a) that writes the data onto the record carrier or a master (13) to produce said record carrier.

12. Method according to anyone of claims 1 to 11, **characterized in that** said data stream (1) is based on the EFM modulated data to be recorded.

13. Method according to anyone of claims 1 to 12, **characterized by** the step of:
- modulating the intensity of the recording laser beam (14a) that writes the data onto the record carrier or a master (13) to produce said record carrier on basis of said data stream (1) and said emulated tracking error signal or a signal (10a, 10b) derived therefrom.

14. Method according to claim 13, **characterized by** the step of:
- rectifying the emulated tracking error signal (8) to generate said signal (10a) derived therefrom.

15. Method according to claim 13 or 14, **characterized by** the step of:
- choosing the level of said emulated tracking error signal to generate said signal (10a) derived therefrom so that high and low reflective areas of the recorded record carrier which lie displaced from an ideal track position will have an equal reading length to corresponding areas which do not lie displaced from the ideal track position.

16. Computer program product, comprising computer program means adapted to perform the method steps as defined in anyone of claims 1 to 15 or parts thereof, comprising at least the emulation of a tracking error signal, when being executed on a computer, digital signal processor, or the like.

17. Device to produce a record carrier, **characterized by**
- an emulating unit (29) for emulating a tracking error signal (8) from a data stream (1) corresponding to the digital data to be recorded, and
- an adaptation unit (29, 31, 30, 28, 17) for adapting a tracking, on the basis of which the data stream (1) is recorded, on the basis of the emulated tracking error signal (8) so that a real tracking error signal that is generated when reading the recorded data is reduced.

18. Device according to claim 17, **characterized by**
- a superposing unit (14, 15, 16) to superpose a track adjustment according to the emulated tracking error signal (8) or a signal (9a, 9b) derived therefrom on said tracking to adapt it on basis of the emulated tracking error signal (8) so that a real tracking error signal that is generated when reading the recorded data is reduced.

19. Device according to claim 18, **characterized by**
- a deflecting unit (17, 28) to deflect a recording laser beam (14b) on basis of said emulated tracking error signal (8) or said signal (9a, 9b) derived therefrom in order to superpose the track adjustment according to the emulated tracking error signal (8) or said signal derived therefrom (9a, 9b) on said tracking.

20. Device according to claim 19, **characterized in that** said deflecting unit (17, 28) comprises an optical or optical-mechanical device to deflect said recording laser beam (14b), in particular an acousto-optical deflector.

21. Device according to claim 19 or 20, **characterized by**
- a wobble unit (17, 28) usable for superposing said tracking so that a wobble signal might be recorded as pre-written timing information onto record carrier recordables, which wobble unit (16) comprises an input receiving said emulated tracking error signal (8) or said signal (9a, 9b) derived therefrom to displace a writing laser beam (14b) while writing said data stream in order to superpose said tracking with said emulated tracking error signal (8) or said signal (9a, 9b) derived therefrom.

22. Device according to anyone of claims 18 to 21, **characterized by**
- an inverter (29) for inverting said emulated tracking error signal (8) to generate said signal (9a) derived therefrom.

23. Device according to anyone of claims 18 to 22, **characterized by**
- a filter (30) for filtering said emulated tracking error signal (8) to generate said signal (9b) derived therefrom.

24. Device according to claim 23, **characterized in that**
- said filter (30) is a low-pass filter, in particular with a cut-off frequency of 100kHz.

25. Device according to anyone of claims 18 to 24, **characterized by**
- a digital-analog converter (31) for digital-analog converting said emulated tracking error signal (8) or said signal (9a, 9b) derived therefrom before supplying the filtered emulated tracking error signal (8) or said filtered signal (9a, 9b) derived therefrom to said defecting unit (17, 28).

26. Device according to anyone of claims 18 to 25, **characterized by**
- an intensity modulator (16) for modulating the intensity of the recording laser beam (14a) that writes the data onto the record carrier or a master (13) to produce said record carrier on basis of said data stream (1) and said emulated tracking error signal or a signal (10a, 10b) derived therefrom.

27. Device according to of claim 26, **characterized by**
- a rectifier (29a) for rectifying the emulated tracking error signal (8) to generate said signal (10a) derived therefrom.

28. Record carrier, **characterized by** track positions (12) of the high and low reflective areas adapted on the basis of an emulated tracking error signal (8), which is emulated from a data stream (1) corresponding to the digital data to be recorded, so that a real tracking error signal that is generated when reading the recorded data is reduced.

29. Record carrier according to claim 28, **characterized in that** said track position (12) is displaced from an ideal track position (4) contrary to a tracking error that would occur from the data stream.

## Patentansprüche

1. Verfahren zum Herstellen eines Aufzeichnungsträgers für digitale Daten, **gekennzeichnet durch** die folgenden Schritte:
- Emulieren eines Spurabweichungssignals (8) aus einem Datenstrom (1), der den aufzuzeichnenden digitalen Daten entspricht; und
- Aufzeichnen des Datenstroms (1) auf Grundlage einer Spurregelung, die auf Grundlage des emulierten Spurabweichungssignals (8) so angepasst ist, dass ein tatsächliches Spurabweichungssignal, wie es beim Lesen der aufgezeichneten Daten erzeugt wird, verkleinert ist.

2. Verfahren nach Anspruch 1, **gekennzeichnet durch** den folgenden Schritt:
- Überlagern einer Spureinstellung entsprechend dem emulierten Spurabweichungssignal (8) oder einem daraus hergeleiteten Signal (9a, 9b) mit der Spurregelung, um diese auf Grundlage des emulierten Spurabweichungssignals (8) so anzupassen, dass ein tatsächliches Spurabweichungssignal, das beim Lesen der aufgezeichneten Daten erzeugt wird, verkleinert ist.

3. Verfahren nach Anspruch 2, **gekennzeichnet durch** den folgenden Schritt:
- Ablenken eines Aufzeichnungslaserstrahls (14b) auf Grundlage des emulierten Spurabweichungssignals (8) oder des daraus hergeleiteten Signals (9a, 9b), um die Spureinstellung gemäß dem emulierten Spurabweichungssignal (8) oder dem daraus hergeleiteten Signal (9a, 9b) mit der Spurregelung zu überlagern.

4. Verfahren nach Anspruch 3, **gekennzeichnet durch** den folgenden Schritt:
- Verwenden eines optischen oder optomechanischen Bauteils (17) zum Ablenken des Aufzeichnungslaserstrahls (14b), insbesondere eines akustooptischen Ablenkers.

5. Verfahren nach Anspruch 3 oder 4, **gekennzeichnet durch** den folgenden Schritt:
- Liefern des emulierten Spurabweichungssignals (8) oder des daraus hergeleiteten Signals (9a, 9b) an einen Wobbeleingang einer Aufzeichnungsträger-Schreibmaschine oder Masterherstellmaschine während des Aufzeichnens des Datenstroms, wobei dieser Wobbeleingang normalerweise dazu verwendet wird, vorab Timinginformation auf bespielbare Aufzeichnungsträger zu schreiben.

6. Verfahren nach einem der Ansprüche 2 bis 5, **gekennzeichnet durch** den folgenden Schritt:
- Invertieren des emulierten Spurabweichungssignals (8), um das aus ihm hergeleitete Signal (9a) zu erzeugen.

7. Verfahren nach einem der Ansprüche 2 bis 6, **gekennzeichnet durch** den folgenden Schritt:
- Filtern des emulierten Spurabweichungssignals (8), um das aus ihm hergeleitete Signal (9b) zu erzeugen.

8. Verfahren nach Anspruch 7, **dadurch gekennzeichnet, dass**
- die Filterung eine Tiefpassfilterung ist, insbesondere eine solche mit einer Grenzfrequenz von 100 kHz.

9. Verfahren nach einem der Ansprüche 2 bis 2, **gekennzeichnet durch** den folgenden Schritt:
- Digital/Analog-Wandeln des emulierten Spurabweichungssignals (8) oder des aus ihm hergeleiteten Signals (9a, 9b) vor dem Überlagern des emulierten Spurabweichungssignals (8) oder des aus ihm hergeleiteten Signals (9a, 9b) mit der Spurregelung.

10. Verfahren nach einem der Ansprüche 1 bis 9, **gekennzeichnet durch** den folgenden Schritt:
- Emulieren des Spurabweichungssignals (8) auf Grundlage einer Simulation eines Dreistrahl-Spurregelungsprinzips auf Grundlage des Datenstroms (1).

11. Verfahren nach einem der Ansprüche 1 bis 10, **dadurch gekennzeichnet, dass** der Datenstrom (1) zum Modulieren der Intensität eines Aufzeichnungslaserstrahls (14a) verwendet wird, der Daten auf den Aufzeichnungsträger oder den Master (13) schreibt, um den Aufzeichnungsträger herzustellen.

12. Verfahren nach einem der Ansprüche 1 bis 11, **dadurch gekennzeichnet, dass** der Datenstrom (1) auf den aufzuzeichnenden EFMmodulierten Daten beruht.

13. Verfahren nach einem der Ansprüche 1 bis 12, **gekennzeichnet durch** den folgenden Schritt:
- Modulieren der Intensität des Aufzeichnungslaserstrahls (14a), der die Daten auf den Aufzeichnungsträger oder einen Master (13) zum Herstellen des Aufzeichnungsträgers schreibt, auf Grundlage des Datenstroms (1) und des emulierten Spurabweichungssignals oder eines aus diesem hergeleiteten Signals (10a, 10b).

14. Verfahren nach Anspruch 13, **gekennzeichnet durch** den folgenden Schritt:
- Gleichrichten des emulierten Spurabweichungssignals (8) zum Erzeugen des aus ihm hergeleiteten Signals (10a).

15. Verfahren nach Anspruch 13 oder 14, **gekennzeichnet durch** den folgenden Schritt:
- Auswählen des Pegels des emulierten Spurabweichungssignals zum Erzeugen des aus ihm hergeleiteten Signals (10a) in solcher Weise, dass Gebiete mit hohem und mit niedrigem Reflexionsvermögen des bespielten Aufzeichnungsträgers, die versetzt gegenüber einer idealen Spurposition liegen, dieselbe Leselänge wie entsprechende Gebiete aufweisen, die nicht versetzt gegenüber der idealen Spurposition liegen.

16. Computerprogrammerzeugnis mit einer Computerprogrammeinrichtung, die so ausgebildet ist, dass sie die Verfahrensschritte, wie sie in einem der Ansprüche 1 bis 15 definiert sind, oder Teile derselben ausführt, mit zumindestens der Emulation eines Spurabweichungssignals, wenn es auf einem Computer, einem digitalen Signalprozessor oder dergleichen ausgeführt wird.

17. Vorrichtung zum Herstellen eines Aufzeichnungsträgers, **gekennzeichnet durch**
- eine Emulationseinheit (29) zum Emulieren eines Spurabweichungssignals (8) aus einem Datenstrom (1), der den aufzuzeichnenden digitalen Daten entspricht; und
- eine Adaptionseinheit (29, 31, 30, 28, 17) zum Anpassen einer Spurregelung, auf deren Grundlage der Datenstrom (1) aufzuzeichnen ist, auf Grundlage des emulierten Spurabweichungssignals (8) in solcher Weise, dass ein tatsächliches Spurabweichungssignal, wie es beim Lesen der aufgezeichneten Daten erzeugt wird, verkleinert ist.

18. Vorrichtung nach Anspruch 17, **gekennzeichnet durch**:
- eine Überlagerungseinheit (14, 15, 16) zum Überlagern einer Spureinstellung entsprechend dem emulierten Spurabweichungssignal (8) oder einem daraus hergeleiteten Signal (9a, 9b) mit der Spurregelung, um diese auf Grundlage des emulierten Spurabweichungssignals (8) so anzupassen, dass ein tatsächliches Spurabweichungssignal, das beim Lesen der aufgezeichneten Daten erzeugt wird, verkleinert ist.

19. Vorrichtung nach Anspruch 18, **gekennzeichnet durch**:
- eine Ablenkeinheit (17, 28) zum Ablenken eines Aufzeichnungslaserstrahls (14b) auf Grundlage des emulierten Spurabweichungssignals (8) oder des daraus hergeleiteten Signals (9a, 9b), um die Spureinstellung gemäß dem emulierten Spurabweichungssignal (8) oder dem daraus hergeleiteten Signal (9a, 9b) mit der Spurregelung zu überlagern.

20. Vorrichtung nach Anspruch 19, gemäß der Erfindung die Ablenkeinheit (17, 28) ein optisches oder optomechanisches Bauteil zum Ablenken des Aufzeichnungslaserstrahls (14b) aufweist, insbesondere einen akustooptischen Ablenker.

21. Vorrichtung nach Anspruch 19 oder 20, **gekennzeichnet durch**
- eine Wobbeleinheit (17, 28), die dazu verwendbar ist, die Spurregelung so zu überlagern, dass ein Wobbelsignal als vorab geschriebene Timinginformation auf bespielbaren Aufzeichnungsträgern aufgezeichnet werden kann, wobei diese Wobbeleinheit (16) einen Eingang aufweist, der das emulierte Spurabweichungssignal (8) oder das aus ihm hergeleitete Signal (9a, 9b) empfängt, um einen Schreiblaserstrahl (14b) auszulenken, während der Datenstrom geschrieben wird, um der Spurregelung das emulierte Spurabweichungssignal (8) oder das aus ihm hergeleitete Signal (9a, 9b) zu überlagern.

22. Vorrichtung nach einem der Ansprüche 18 bis 21, **gekennzeichnet durch**
- einen Inverter (29) zum Invertieren des emulierten Spurabweichungssignals (8), um das aus ihm hergeleitete Signal (9a) zu erzeugen.

23. Vorrichtung nach einem der Ansprüche 18 bis 22, **gekennzeichnet durch**
- ein Filter (30) zum Filtern des emulierten Spurabweichungssignals (8), um das aus ihm hergeleitete Signal (9b) zu erzeugen.

24. Vorrichtung nach Anspruch 23, **dadurch gekennzeichnet, dass**
- das Filter (30) ein Tiefpassfilter ist, insbesondere ein solches mit einer Grenzfrequenz von 100 kHz.

25. Vorrichtung nach einem der Ansprüche 18 bis 24, **gekennzeichnet durch**
- einen Digital/Analog-Wandler (13) zum Digital/Analog-Wandeln des emulierten Spurabweichungssignals (8) oder des aus ihm hergeleiteten Signals (9a, 9b) vor dem Liefern des gefilterten emulierten Spurabweichungssignals (8) oder des aus ihm hergeleiteten gefilterten Signals (9a, 9b) an die Ablenkeinheit (17, 28).

26. Vorrichtung nach einem der Ansprüche 18 bis 25, **gekennzeichnet durch**
- einen Intensitätsmodulator (16) zum Modulieren der Intensität des Aufzeichnungslaserstrahls (14a), der die Daten auf den Aufzeichnungsträger oder einen Master (13) zum Herstellen des Aufzeichnungsträgers schreibt, auf Grundlage des Datenstroms (1) und des emulierten Spurabweichungssignals oder eines aus diesem hergeleiteten Signals (10a, 10b).

27. Vorrichtung nach Anspruch 26, **gekennzeichnet durch**
- einen Gleichrichter (29a) zum Gleichrichten des emulierten Spurabweichungssignals (8), um das aus ihm hergeleitete Signal (10a) zu erzeugen.

28. Aufzeichnungsträger, **gekennzeichnet durch** Spurpositionen (12) entsprechend Gebieten mit hohem und mit niedrigem Reflexionsvermögen, die auf Grundlage eines emulierten Spurabweichungssignals (8) ausgebildet werden, das aus einem Datenstrom (1) e-muliert wird, der den aufzuzeichnenden digitalen Daten entspricht, so dass ein tatsächliches Spurabweichungssignals, das beim Lesen der aufgezeichneten Daten erzeugt wird, verkleinert ist.

29. Aufzeichnungsträger nach Anspruch 28, **dadurch gekennzeichnet, dass** die Spurposition (12) gegenüber einer idealen Spurposition (4) entgegen einer Spurabweichung versetzt ist, wie sie sich aus dem Datenstrom ergeben würde.

## Revendications

1. Procédé pour produire un support d'enregistrement pour des données numériques, **caractérisé par** les étapes consistant à :
- émuler un signal d'erreur de piste (8) à partir d'un flux de données (1) correspondant aux données numériques à enregistrer, et
- enregistrer le flux de données (1) sur la base d'un dépistage qui est adapté sur la base du signal d'erreur de piste émulé (8) de sorte qu'un signal d'erreur de piste réel qui est généré à la lecture des données enregistrées soit réduit.

2. Procédé selon la revendication 1, **caractérisé par** l'étape consistant à :
- superposer un ajustement de piste selon le signal d'erreur de piste émulé (8) ou un signal (9a, 9b) dérivé de celui-ci sur ledit dépistage afin de l'adapter sur la base du signal d'erreur de piste émulé (8) de sorte qu'un signal d'erreur de piste réel qui est généré à la lecture des données enregistrées soit réduit.

3. Procédé selon la revendication 2, **caractérisé par** l'étape consistant à :
- dévier un faisceau laser d'enregistrement (14b) sur la base dudit signal d'erreur de piste émulé (8) ou dudit signal (9a, 9b) dérivé de celui-ci afin de superposer l'ajustement de piste selon le signal d'erreur de piste émulé (8) ou ledit signal (9a, 9b) dérivé de celui-ci sur ledit dépistage.

4. Procédé selon la revendication 3, **caractérisé par** l'étape consistant à :
- utiliser un dispositif optique ou mécanico-optique (17) afin de dévier ledit faisceau laser d'enregistrement (14b), en particulier un déflecteur acousto-optique.

5. Procédé selon la revendication 3 ou 4, **caractérisé par** l'étape consistant à :
- fournir ledit signal d'erreur de piste émulé (8) ou ledit signal (9a, 9b) dérivé de celui-ci vers une entrée de balayage d'une machine d'écriture ou de matriçage de support d'enregistrement tout en enregistrant ledit flux de données, laquelle entrée de balayage étant normalement utilisée pour pré-écrite des informations de temps sur des moyens inscriptibles de support d'enregistrement.

6. Procédé selon l'une quelconque des revendications 2 à 5, **caractérisé par** l'étape consistant à :
- inverser ledit signal d'erreur de piste émulé (8) afin de générer ledit signal (9a) dérivé de celui-ci.

7. Procédé selon l'une quelconque des revendications 2 à 6, **caractérisé par** l'étape consistant à :
- filtrer ledit signal d'erreur de piste émulé (8) afin de générer ledit signal (9b) dérivé de celui-ci.

8. Procédé selon la revendication 7, **caractérisé en ce que**
- ledit filtrage est un filtrage passe-bas, en particulier avec une fréquence de coupure de 100 kHz.

9. Procédé selon l'une quelconque des revendications 2 à 8, **caractérisé par** l'étape consistant à :
- convertir de numérique en analogique ledit signal d'erreur de piste émulé (8) ou ledit signal (9a, 9b) dérivé de celui-ci avant de superposer le signal d'erreur de piste émulé (8) ou ledit signal (9a, 9b) dérivé de celui-ci sur ledit dépistage.

10. Procédé selon l'une quelconque des revendications 1 à 9, **caractérisé par** l'étape consistant à :
- émuler ledit signal d'erreur de piste (8) basé sur une simulation d'un principe de dépistage à trois faisceaux sur la base du flux de données (1).

11. Procédé selon l'une quelconque des revendications 1 à 10, **caractérisé en ce que**
ledit flux de données (1) est utilisé pour moduler l'intensité d'un faisceau laser d'enregistrement (14a) qui écrit les données sur le support d'enregistrement ou une matrice (13) afin de produire ledit support d'enregistrement.

12. Procédé selon l'une quelconque des revendications 1 à 11, **caractérisé en ce que**
ledit flux de données (1) est basé sur les données modulées EFM à enregistrer.

13. Procédé selon l'une quelconque des revendications 1 à 12, **caractérisé par** l'étape consistant à :
- moduler l'intensité du faisceau laser d'enregistrement (14a) qui écrit les données sur le support d'enregistrement ou une matrice (13) afin de produire ledit support d'enregistrement sur la base dudit flux de données (1) et dudit signal d'erreur de piste émulé ou d'un signal (10a, 10b) dérivé de celui-ci.

14. Procédé selon la revendication 13, **caractérisé par** l'étape consistant à :
- redresser le signal d'erreur de piste émulé (8) afin de générer ledit signal (10a) dérivé de celui-ci.

15. Procédé selon la revendication 13 ou 14, **caractérisé par** l'étape consistant à :
- choisir le niveau dudit signal d'erreur de piste émulé afin de générer ledit signal (10a) dérivé de celui-ci de sorte que des zones de haute et basse réflexion du support d'enregistrement enregistré qui se trouvent déplacées par rapport à une position de piste idéale aient une longueur de lecture égale à des zones correspondantes qui ne se trouvent pas déplacées de la position de piste idéale.

16. Produit de programme informatique, comprenant un moyen de programme informatique adapté pour effectuer les étapes de procédé selon l'une quelconque des revendications 1 à 15 ou des parties de celles-ci, comprenant au moins l'émulation d'un signal d'erreur de piste lorsqu'il est exécuté sur un ordinateur, un processeur de signal numérique, ou similaire.

17. Dispositif pour produire un support d'enregistrement, **caractérisé par** :
- une unité d'émulation (29) destinée à émuler un signal d'erreur de piste (8) à partir d'un flux de données (1) correspondant aux données numériques à enregistrer, et
- une unité d'adaptation (29, 31, 30, 28, 17) destinée à adapter un dépistage, sur la base duquel est enregistré le flux de données (1), sur la base du signal d'erreur de piste émulé (8) de sorte qu'un signal d'erreur de piste réel qui est généré à la lecture des données enregistrées soit réduit.

18. Dispositif selon la revendication 17, **caractérisé par** :
- une unité de superposition (14, 15, 16) afin de superposer un ajustement de piste selon le signal d'erreur de piste émulé (8) ou un signal (9a, 9b) dérivé de celui-ci sur ledit dépistage afin de l'adapter sur la base du signal d'erreur de piste émulé (8) de sorte qu'un signal d'erreur de piste réel qui est généré à la lecture des données enregistrées soit réduit.

19. Dispositif selon la revendication 18, **caractérisé par** :
- une unité de déviation (17, 28) afin de dévier un faisceau laser d'enregistrement (14b) sur la base dudit signal d'erreur de piste émulé (8) ou dudit signal (9a, 9b) dérivé de celui-ci afin de superposer l'ajustement de piste selon le signal d'erreur de piste émulé (8) ou ledit signal (9a, 9b) dérivé de celui-ci sur ledit dépistage.

20. Dispositif selon la revendication 19, **caractérisé en ce que** ladite unité de déviation (17, 28) comprend un dispositif optique ou mécanico-optique afin de dévier ledit faisceau laser d'enregistrement (14b), en particulier un déflecteur acousto-optique

21. Dispositif selon la revendication 19 ou 20, **caractérisé par** :
- une unité de balayage (17, 28) pouvant être utilisée pour superposer ladite piste de sorte qu'un signal de balayage puisse être enregistré comme informations de temps pré-écrites sur des moyens inscriptibles de support d'enregistrement, laquelle unité de balayage (16) comprend une entrée input recevant ledit signal d'erreur de piste émulé (8) ou ledit signal (9a, 9b) dérivé de celui-ci afin de déplacer un faisceau laser d'écrite (14b) tout en écrivant ledit flux de données afin de superposer ledit dépistage avec ledit signal d'erreur de piste émulé (8) ou ledit signal (9a, 9b) dérivé de celui-ci.

22. Dispositif selon l'une quelconque des revendications 18 à 21, **caractérisé par** :
- un inverseur (29) destiné à inverser ledit signal d'erreur de piste émulé (8) afin de générer ledit signal (9a) dérivé de celui-ci.

23. Dispositif selon l'une quelconque des revendications 18 à 22, **caractérisé par** :
- un filtre (30) destiné à filtrer ledit signal d'erreur de piste émulé (8) afin de générer ledit signal (9b) dérivé de celui-ci.

24. Dispositif selon la revendication 23, **caractérisé en ce que** :
- ledit filtre (30) est un filtre passe-bas, en particulier avec une fréquence de coupure de 100 kHz.

25. Dispositif selon l'une quelconque des revendications 18 à 24, **caractérisé par** :
- un convertisseur numérique-analogique (31) destiné à convertir de numérique en analogique ledit signal d'erreur de piste émulé (8) ou ledit signal (9a, 9b) dérivé de celui-ci avant de fournir le signal d'erreur de piste émulé (8) filtré ou ledit signal filtré (9a, 9b) dérivé de celui-ci vers ladite unité de déviation (17, 28).

26. Dispositif selon l'une quelconque des revendications 18 à 25, **caractérisé par** :
- un modulateur d'intensité (16) destiné à moduler l'intensité du faisceau laser d'enregistrement (14a) qui écrit les données sur le support d'enregistrement ou une matrice (13) afin de produire ledit support d'enregistrement sur la base dudit flux de données (1) et dudit signal d'erreur de piste émulé ou d'un signal (10a, 10b) dérivé de celui-ci.

27. Dispositif selon la revendication 26, **caractérisé par** :
- un redresseur (29a) destiné à redresser le signal d'erreur de piste émulé (8) afin de générer ledit signal (10a) dérivé de celui-ci.

28. Support d'enregistrement, **caractérisé par** des positions de piste (12) des zones de haute et basse réflexion adaptées sur la base d'un signal d'erreur de piste émulé (8) qui est émulé à partir d'un flux de données (1) correspondant aux données numériques à enregistrer, de sorte qu'un signal d'erreur de piste réel qui est généré à la lecture des données enregistrées soit réduit.

29. Support d'enregistrement selon la revendication 28, **caractérisé en ce que** ladite position de piste (12) est déplacée par rapport à une position de piste idéale (4) contraire à une erreur de piste qui se produirait à partir du flux de données.
